# FASCICULE DE BREVET EUROPEEN

(11) **EP 2 897 865 B1**
(45) Date de publication et mention de la délivrance du brevet: **05.12.2018**
(21) Numéro de dépôt: 13771405.1
(22) Date de dépôt: 05.09.2013
(51) Int. Cl.: B64F 1/36

(54) **PROCEDE ET SYSTEME DE DEPOSE AUTOMATIQUE DE BAGAGES**
VERFAHREN UND VORRICHTUNG ZUR AUTOMATISCHEN GEPAECKAUFGABE
METHOD FOR AUTOMATIC BAGGAGE HANDLING AND ASSOCIATED SYSTEM

(30) Priorité: 18.09.2012 FR 1258738
(43) Date de publication de la demande: 29.07.2015
(73) Titulaire: IER, 92150 Suresnes (FR)
(72) Inventeur: ROUX, Damien, F-75014 Paris (FR)
(74) Mandataire: IPAZ
(86) Numéro de dépôt international: PCT/EP2013/068354
(87) Numéro de publication internationale: WO 2014/044543

(56) Documents cités:
- EP-A1- 0 770 546
- US-A1- 2004 035 928

## Description

La présente invention concerne un procédé de dépose automatique d'objets en vue du transport desdits objets. Elle concerne également un système mettant en oeuvre ce procédé.

Le domaine de l'invention est le domaine du transport d'objets et plus particulièrement le domaine du transport aérien.

L'invention peut être plus particulièrement mise en oeuvre dans des lieux tels que des aéroports pour la dépose de bagages par un passager de transport aérien en vue du transport des bagages dans la soute d'un avion.

Elle peut également être mise en oeuvre dans des lieux tels que des bureaux de poste pour la dépose de colis à transporter par une compagnie postale.

### Etat de la technique

Les premiers systèmes de dépose de bagages équipant les aéroports comprennent un convoyeur principal. Les bagages sont placés sur le convoyeur principal par des opérateurs qui transportent ces bagages depuis une zone de dépose jusqu'au convoyeur principal. Une fois placé sur le convoyeur principal, les bagages sont transportés par le convoyeur principal vers une zone de chargement des bagages dans l'avion.

Les systèmes de nouvelle génération comprennent, en plus du convoyeur principal, des convoyeurs, dit secondaires, reliant la zone de dépose au convoyeur principal et évitant le transport, par des opérateurs, des bagages de la zone de dépose jusqu'au convoyeur principal. Les bagages sont déposés sur les convoyeurs secondaires par des opérateurs habilités après vérification des cartes d'embarquement des passagers.

Ces systèmes de nouvelle génération ont été modifiés pour permettre une dépose de bagages de manière automatisée par les utilisateurs en vue, entre autre, d'obtenir une dépose plus rapide des bagages. Pour ce faire, la zone de chargement a été pourvue d'une borne permettant de vérifier la carte d'embarquement de l'utilisateur et son droit d'emporter un bagage en soute et éventuellement d'imprimer une étiquette d'identification pour son bagage.

Cependant, de nombreux aéroports sont toujours équipés des premiers systèmes de dépose de bagages : ces systèmes comprennent uniquement un convoyeur principal et pas de convoyeur secondaire. Les bagages déposés par les utilisateurs dans les zones de dépose sont chargés sur le convoyeur principal par des opérateurs.

Equiper chacun de ces aéroports avec un système de dépose de bagage de nouvelle génération représente un coût élevé et un temps d'immobilisation de l'aéroport non négligeable. De plus, les aéroports existants ne comportent pas toujours la place nécessaire à l'installation de convoyeurs secondaires. Dans ces aéroports, il est donc difficile et surtout coûteux de mettre en place les systèmes automatisés existants.

On connaît le document US 2004/035928 A1 qui décrit un procédé de dépose de bagages sur un convoyeur, en vue du transport des bagages, au niveau d'une zone de dépose comprenant un point d'entrée et un point de sortie.

L'invention a pour but de pallier les inconvénients précités.

Un autre but de l'invention est de proposer un procédé et un système de dépose de bagages permettant de déposer des bagages de manière automatisée et sécurisée directement sur le convoyeur principal, qui sont moins coûteux que d'équiper les sites existants avec les systèmes de première ou deuxième génération décrits plus haut.

### Exposé de l'Invention

L'invention permet d'atteindre au moins l'un des buts précités par un procédé de dépose automatique d'au moins un objet sur un convoyeur, en vue du transport dudit au moins un objet, au niveau d'une zone, dite de dépose, délimitée et laissant accès audit convoyeur, ladite zone de dépose comprenant au moins un point d'entrée et au moins un point de sortie, ledit procédé comprenant lors de la dépose d'au moins un objet par au moins un utilisateur :
▪ une phase, dite d'entrée dans la zone de dépose, comprenant les étapes suivantes :
   - lecture, dite première lecture, d'une donnée d'autorisation d'accès à ladite zone de dépose fournie par ledit utilisateur, et
   - lorsque la donnée d'autorisation lue est valide, autorisation dudit utilisateur à entrer dans ladite zone de dépose ; et
▪ une phase, dite de dépose, comprenant les étapes suivantes :
   - lecture, dite deuxième lecture, de ladite donnée d'autorisation à l'intérieur de la zone de dépose,
   - lorsque la donnée d'autorisation lue lors de la deuxième lecture est une donnée lue préalablement lors de la première lecture, création et délivrance d'un moyen, dit étiquette, d'identification dudit objet comprenant au moins une donnée relative au transport et/ou à l'identification de l'objet,
   - pose de ladite étiquette d'identification sur ledit objet, et
   - dépose dudit objet sur ledit convoyeur par ledit utilisateur.

Dans la suite de la description, les mots « utilisateur » et « passager » sont utilisés de manière équivalente entre eux ainsi que les mots « objet » et « bagage »

Ainsi, l'invention permet de réaliser une dépose automatique des bagages, sans devoir équiper les installations existantes à l'aide d'éléments encombrants et coûteux et sans compromettre la sécurité de transport.

En outre, l'invention permet, en évitant la présence de convoyeurs secondaires, d'optimiser l'espace dans le site concerné et d'assurer un meilleur débit d'objet, en particulier de passagers dans le cas du transport aérien, et de limiter le temps d'attente pour la dépose d'objets.

Bien évidemment, le convoyeur demeure inaccessible aux passagers à l'extérieur de la zone de dépose des objets.

Le procédé selon l'invention peut en outre comprendre préalablement à la dépose d'au moins un objet sur ledit convoyeur, une étape de définition d'une zone de dépose telle que décrite. Une telle zone peut être décrite par l'installation de moyens délimitant la zone, tels que des barrières ou autre.

L'étape de création de l'étiquette peut comprendre une étape d'impression de l'au moins une donnée sur un support et/ou une étape d'inscription de l'au moins une donnée sous forme numérique dans une mémoire, telle qu'une puce RFID, intégrée à l'étiquette.

Une fois l'étiquette délivrée, l'utilisateur peut lui-même placer son bagage sur le convoyeur. Il est équipé d'une étiquette de sorte qu'il pourra être correctement dirigé vers le moyen de transport, en particulier vers l'avion, prévu et la sécurité est suffisante à l'intérieur de la zone pour éviter qu'un objet/bagage n'appartenant pas à un utilisateur/passager autorisé soit embarqué dans le moyen de transport/l'avion. Un objet/bagage non muni d'étiquette est forcément laissé à quai.

Pour déterminer si la donnée d'autorisation lue à la deuxième lecture, est une donnée d'autorisation déjà lue à la première lecture, le procédé selon l'invention peut par exemple comprendre, lors de la phase d'entrée dans la zone de dépose, une mémorisation, dans une base de donnée distante ou locale, de la donnée d'autorisation lue lors de l'étape de première lecture et, lors de la phase de dépose, une consultation de cette base de données et une comparaison de la donnée d'autorisation lue lors de la deuxième lecture avec les données mémorisées dans la base de données.

Avantageusement, la donnée d'autorisation peut être inscrite sur une carte d'embarquement à code barre ou sous forme numérique dans une mémoire, telle qu'une puce RFID intégrée à cette carte, qui est lue par les différents lecteurs.

Pour déterminer si la donnée d'autorisation est valide ou non, après l'étape de première lecture, la phase d'entrée dans la zone de dépose peut comprendre une consultation d'une base de données distante ou locale. La phase d'entrée dans la zone de dépose peut alors comprendre une étape de comparaison de la donnée d'autorisation lue à une donnée mémorisée dans la base de données et relative à :
- un lieu de départ, par exemple un lieu de départ d'un vol dans le cas d'un bagage transporté par voie aérienne,
- un lieu d'arrivée par exemple un lieu d'arrivée d'un vol dans le cas d'un bagage transporté par voie aérienne,
- une heure de départ, et/ou
- un droit associé à un transport, par exemple le droit de bagage associé à un vol dans le cas d'un transport aérien.

La phase d'entrée dans la zone de dépose peut en outre comprendre :
- une étape de lecture d'une donnée d'identité, par exemple une lecture d'une pièce d'identification, d'un numéro d'une pièce d'identité, de données biométriques de l'utilisateur telles que les empreintes digitales ou rétinienne de l'utilisateur, et
- une étape de vérification de l'association de la donnée d'autorisation lue avec la donnée d'identité lue, l'autorisation à entrer dans la zone étant alors également fonction du résultat de cette étape de vérification.

Une telle vérification permet de s'assurer que l'utilisateur qui se présente avec la donnée d'autorisation est bien la personne à qui cette donnée d'autorisation a été délivrée.

Une telle vérification peut être réalisée par comparaison de la donnée d'identité avec une donnée préalablement mémorisée dans une base de données et/ou directement dans le support, par exemple la carte d'embarquement, depuis lequel la donnée d'autorisation est lue.

L'étape d'entrée dans la zone de dépose peut en outre comprendre une ouverture d'un dispositif de régulation d'entrée, tel qu'une barrière ou un portique, dans la zone de dépose.

Un tel dispositif peut être commandé directement par le moyen de lecture réalisant la première lecture ou par un serveur central en fonction des données qui lui sont communiquées par le moyen de lecture réalisant la première lecture et/ou du résultat d'au moins une autre vérification qui est réalisée par le serveur lui-même, telle que la correspondance entre les données biométriques lues et celles mémorisées dans une base de données.

Le procédé selon l'invention peut en outre comprendre, une phase, dite de sortie de la zone de dépose, réalisée après la phase de dépose et comprenant, notamment lorsque l'étiquette comprend un support de données lisible à distance, tel qu'une puce RFID :
- une étape de détection d'une étiquette délivrée dans la zone de dépose et non apposée sur un objet avant de sortir de la zone de dépose, et
- une étape d'ouverture d'un dispositif de régulation de sortie, tel qu'une barrière ou un portique, de la zone de dépose lorsqu'aucune étiquette n'est détectée lors de l'étape de détection.

Ainsi, il est possible de détecter le ou les passagers qui sont sortis avec une étiquette non apposée sur l'objet pour lequel elle a été délivrée et qui pourraient donc essayer par la suite de l'appliquer sur un autre objet non contrôlé par exemple.

Une telle détection peut être réalisée en disposant au niveau du point de sortie des portiques de détection d'étiquettes RFID, et plus généralement d'étiquettes lisibles à distance.

Selon un mode de réalisation, le procédé peut comprendre :
- une étape de mémorisation, en association avec l'utilisateur, des étiquettes délivrées à l'utilisateur,
- une étape de détection des étiquettes apposées sur les objets passant sur le convoyeur,
- une étape de modification du statut d'une donnée associée à l'étiquette une fois l'étiquette détectée sur le convoyeur.

En d'autres termes, lors de l'étape de délivrance de chaque étiquette, une inscription d'une référence de l'étiquette délivrée peut être réalisée, en tant qu'étiquette délivrée :
- soit dans un support d'identification depuis lequel la donnée d'autorisation est lue,
- soit dans une base de données distante ou locale,
en association avec la donnée d'autorisation ou une donnée d'identification de l'utilisateur auquel est associée la donnée d'autorisation.

Puis, lors de la dépose de chaque objet sur le convoyeur, la référence de l'étiquette est lue par un lecteur, par exemple un portique au travers duquel les objets sont transportés par le convoyeur ou déposés sur le convoyeur, et chaque référence lue est mémorisée dans une base de données en tant qu'étiquette déposée.

Dans ce cas, l'étape de détection de la phase de sortie peut comprendre :
- une étape de lecture, dite troisième lecture, d'une donnée relative à l'utilisateur, et
- une étape de vérification du statut des étiquettes mémorisées en association avec l'utilisateur ;
l'étape d'ouverture d'un dispositif de régulation de sortie de la zone de dépose étant réalisée en fonction du statut des étiquettes et éventuellement du résultat de la comparaison de données relatives au poids et/ou aux dimensions des objets sur lesquelles ont été apposées les étiquettes.

Notamment, l'étape de détection peut alors comprendre, dans ce mode de réalisation, et pour au moins un utilisateur désirant quitter la zone de dépose, les étapes suivantes :
- une lecture, dite troisième lecture, de la donnée d'autorisation de l'utilisateur,
- vérification que toutes les étiquettes mémorisées comme « délivrée » sont également mémorisées comme « déposée ».

Si oui, la sortie de l'utilisateur est autorisée. Sinon une étape de traitement adéquate peut être entreprise.

Le procédé selon l'invention peut en outre comprendre une étape de mesure et de vérification d'un poids ou d'une dimension d'au moins un objet lors de la phase d'entrée dans la zone de dépose ou lors de la phase de dépose.

Ainsi, il est possible de vérifier que l'objet qui sera transporté, par exemple dans un avion, est bien celui qui a été vérifié auparavant.

Avantageusement, pour au moins un objet, l'étape de mesure et de vérification, peut comprendre :
- avant l'étape de dépose, une étape de mémorisation d'au moins une donnée relative à une dimension ou un poids de l'objet, dans l'étiquette qui sera apposée à l'objet ou dans une base de données, et
- lors de/après l'étape de dépose de l'objet sur le convoyeur :
   ▪ une étape de mesure d'un poids ou d'une dimension de l'objet, et
   ▪ une étape de comparaison dudit poids ou de ladite dimension mesuré(e) avec ladite donnée de poids ou de dimension mémorisée.

Avantageusement, l'autorisation de sortie de la zone de dépose par l'ouverture du dispositif de régulation peut être donnée en outre en fonction du résultat de cette étape de mesure et de vérification.

Selon un autre aspect de l'invention il est proposé un système de dépose automatique d'au moins un objet sur un convoyeur en vue du transport dudit au moins un objet, ledit système comprenant :
- au moins un moyen pour délimiter une zone, dite de dépose, permettant d'accéder audit convoyeur et comprenant au moins un point d'entrée dans ladite zone et au moins un point de sortie de ladite zone,
- au niveau de chaque point d'entrée dans ladite zone de dépose au moins un moyen de lecture, dit premier lecteur, d'une donnée d'autorisation,
- dans la zone de dépose :
   ▪ au moins un moyen de lecture, dit deuxième lecteur, d'une donnée d'identification, et
   ▪ au moins un moyen de délivrance d'un moyen, dit étiquette, d'identification à apposer sur l'objet à déposer, et
- au moins une base de données stockant des données relatives à l'utilisateur et/ou à l'objet, accessible par lesdits lecteurs (116,132),
- des moyens de comparaison des données lues par le premier lecteur avec des données stockées dans la base de données et/ou les données lues par le premier lecteur avec celles lues par le deuxième lecteur.

Le système selon l'invention peut en outre comprendre au niveau de chaque point d'entrée de la zone de dépose, au moins un moyen de régulation d'entrée de ladite zone de dépose.

Le système selon l'invention peut en outre comprendre au niveau de chaque point de sortie de la zone de dépose :
▪ au moins un moyen de régulation de sortie de ladite zone de dépose, et
▪ au moins un moyen de lecture, dit troisième lecteur, d'une donnée relative à l'utilisateur telle que la donnée d'autorisation ;
la base de données étant en outre accessible audit troisième lecteur.

Au moins un des premier, deuxième ou troisième lecteurs, et en particulier le deuxième lecteur, peut également être ou comprendre un moyen d'écriture, notamment d'impression ou d'inscription d'une donnée numérique, sur l'étiquette et/ou sur un support d'identification depuis lequel la donnée d'autorisation est lue..

Le système selon l'invention peut en outre comprendre au moins un moyen de mesure d'un poids ou d'une dimension d'un objet.

Avantageusement, le système peut en outre comprendre au moins un moyen d'écriture sur l'étiquette et/ou sur un support d'identification depuis lequel la donnée d'autorisation est lue, ledit moyen d'écriture étant en communication, au moins indirectement, avec l'au moins un moyen de mesure de poids ou de dimension, et/ou l'au moins un moyen de délivrance d'étiquettes.

Le système selon l'invention est particulièrement adapté pour la dépose automatisée de bagages dans un aéroport.

D'autres avantages et caractéristiques apparaîtront à l'examen de la description détaillée d'exemples nullement limitatifs, et des dessins annexés sur lesquels :
- les FIGURE 1 est une représentation schématique d'un système selon l'invention ; et
- la FIGURE 2 est une représentation schématique des étapes d'un procédé selon l'invention,

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

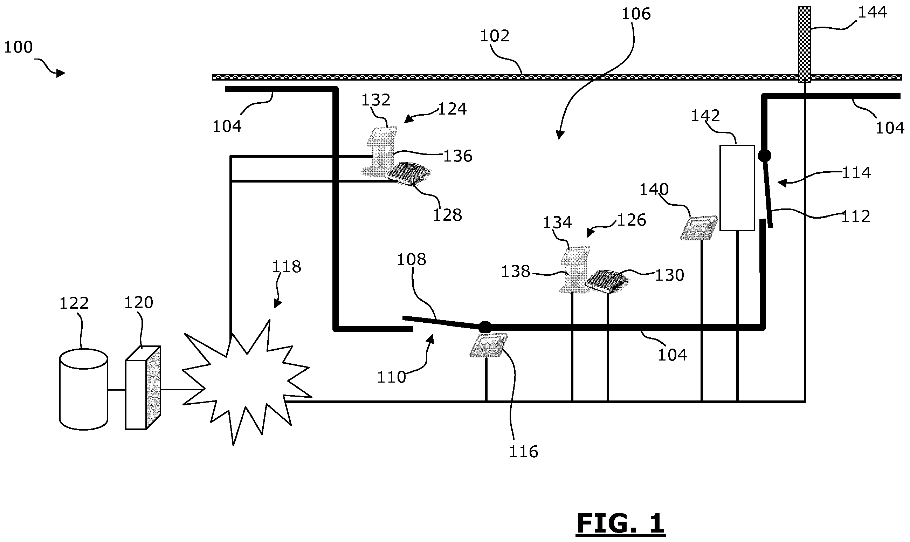

La FIGURE 1 est une représentation schématique d'un mode de réalisation non limitatif d'un système selon l'invention.

Le système 100 de la FIGURE 1 permet de réaliser une dépose automatisée de bagages dans un aéroport comprenant un convoyeur 102 qui transporte les bagages déposés jusqu'à une zone de chargement des bagages dans la soute d'un avion.

Le système comprend un ensemble 104 de barrières qui est collé au convoyeur 102 afin d'empêcher toute dépose de bagage sur celui-ci, sauf dans une zone 106, dite de dépose, délimité par l'ensemble 102 de barrière et autorisant un accès au convoyeur.

Le système 100 comprend un dispositif 108 de régulation de passage, disposé à l'entrée 110 de la zone de dépose 106 et un dispositif 112 de régulation de passage disposé à la sortie 114 de la zone de dépose 106.

Chaque dispositif de régulation de passage 108, 112 peut être une porte ou une barrière pouvant être déplacée, par un ou plusieurs moteurs (non représentés), entre une position fermée interdisant le passage et une position ouverte autorisation le passage.

Ainsi, dans la position ouverte, le dispositif 108 autorise le passage vers la zone de dépose 106 depuis l'extérieur de la zone de dépose, et le dispositif 112 autorise le passage depuis la zone de dépose 106 vers l'extérieur de la zone de dépose 106.

A l'extérieur de la zone de dépose, au voisinage de l'entrée 110, est placé un dispositif de lecture 116, dit premier lecteur, apte à lire une donnée d'autorisation d'accès dans la zone de dépose 106 inscrite sur/dans un support d'identification.

Le support d'identification peut être une carte d'embarquement à code-barres ou RFID. Lorsque que la carte d'embarquement est à code-barres la donnée d'autorisation peut être contenue ou représentée par le code-barres de la carte d'embarquement. Lorsque la carte d'embarquement comporte une carte RFID, la donnée d'autorisation est inscrite dans une puce de la carte d'embarquement RFID.

Le premier lecteur 116 peut éventuellement également lire un moyen d'identification écrite sur/dans d'une pièce d'identité du passager ou des données biométriques du passager, telles que par exemple par une prise d'empreintes digitales ou rétinienne.

Le premier lecteur 116 est relié, par le biais d'un réseau 118, tel qu'un réseau Internet, à un serveur central 120 local ou distant avec lequel il est apte à communiquer. Le serveur 120 stocke des données relatives aux utilisateurs qui sont dans le présent exemple des passagers, dans une base de données 122. Ce serveur peut lui-même se connecter à d'autres serveurs pour valider les droits des passagers.

Le premier lecteur 116 est relié au dispositif de régulation d'entrée 108 qu'il commande en fonction des résultats de la comparaison entre les données lues depuis un ou des supports d'identification et des données stockées dans la base de données 122 du serveur central 120.

A l'intérieur de la zone de dépose 106, le système 100 comprend également deux bornes 124 et 126 qui peuvent éventuellement être associées chacune à un dispositif de chargement, respectivement 128 et 130. Chaque borne 124, 126 comprend également :
- un dispositif de lecture, référencé respectivement 132 et 134, dit deuxième lecteur, d'un moyen d'identification tel qu'une carte d'embarquement, et
- une imprimante, référencée respectivement 136 et 138, pour l'impression de moyen d'identification de bagages, tels que des étiquettes à bagage.

Chaque borne 124, 126 est également apte à communiquer avec le serveur central 120 par le biais du réseau 118.

Chaque dispositif de chargement 128, 130 comprend au moins un moyens de pesée des bagages, et éventuellement au moins moyen de vérification des dimensions de ceux-ci.

Chaque dispositif de chargement 128, 130 est relié à la borne correspondante, respectivement 124 et 126, qui est apte à récupérer les valeurs envoyées par le dispositif de chargement 128 et 130, à les comparer avec des valeurs autorisées stockées localement ou à distance, par exemple au niveau du serveur 120 dans la base de données 122. L'impression de l'étiquette ou d'autres opérations (requête auprès du passager, paiement, etc.) peuvent être commandées en fonction du résultat de cette comparaison.

Chaque borne 128 et 130 comprend également des moyens d'interaction (non représentés) avec le passager tel qu'un clavier, un écran et éventuellement des moyens de paiement.

Le système 100 comprend également un dispositif de lecture 140, dit troisième lecteur, disposé à l'intérieur de la zone de dépose 106 au niveau de la sortie 114, qui est identique au premier lecteur 116. Ce troisième lecteur est également relié au serveur 120 par le biais du réseau 118 et permet la commande du dispositif de régulation de sortie 112.

En regard de la sortie 114 de la zone de dépose 106, le système 100 comprend également un dispositif 142 de détection de moyens d'identification de bagages, tels que des étiquettes RFID. Cela permet de détecter si un passager tente de sortir de la zone de dépose 106 avec une étiquette sur lui. Des moyens d'avertissement lumineux et/ou sonores (non représentés) peuvent être prévus au cas où un passager transporterait une étiquette sur lui.

Le dispositif 142 de détection est également relié au serveur 120 par le biais du réseau 118.

Le système 100 comprend un tunnel 144 disposé au-dessus du convoyeur 102 lorsque les bagages sortent de la zone par le biais du convoyeur 102. Ce tunnel 144 comprend des moyens de détection des étiquettes, et éventuellement de lecture de données présentes par exemple dans la puce RFID lorsque les étiquettes sont des étiquettes RFID. Le tunnel 144 est également relié au serveur central 120 par l'intermédiaire du réseau 118 de communication et donc à la base de données 122 dans lequel sont stockées des données relatives aux bagages et aux différents éléments du système.

Le tunnel 144 peut également comprendre des moyens (non représentés) de pesée et/ou de vérification des dimensions de bagages.

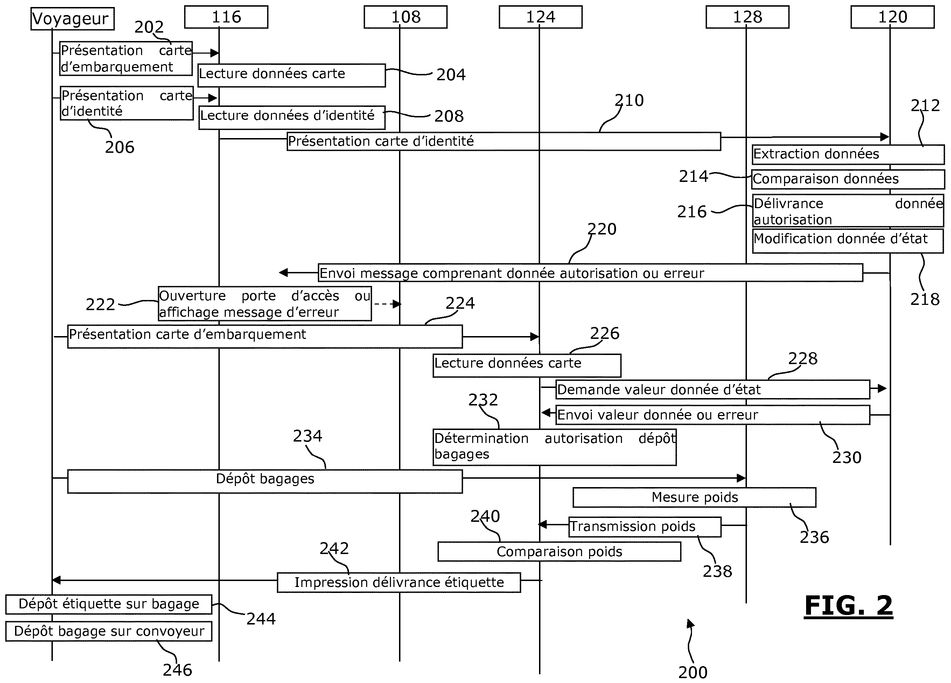

La FIGURE 2 est une représentation schématique d'un exemple d'un procédé de dépose automatisée d'objets en vue de leur transport selon l'invention.

Le procédé 200 représenté sur la FIGURE 2 est décrit, plus particulièrement, dans le cadre de la dépose automatisée de bagages par des passagers du transport aérien dans un aéroport, et peut être mis en oeuvre par le système 100 de la FIGURE 1 sans être limité à ce système.

Lors d'une étape 202 le passager qui souhaite entrer dans la zone de dépose sécurisée, par exemple la zone de dépose 106, présente, sur un premier lecteur, par exemple le premier lecteur 116, sa carte d'embarquement qui comprend un code-barres.

Lors d'une étape 204, le premier lecteur lit le code-barres. Ce code-barres permet de coder un identifiant qui identifie le passager.

Eventuellement, le procédé 200 peut comprendre une étape 206 pendant laquelle le passager présente une pièce d'identité sur le premier lecteur et une étape 208 pendant laquelle le premier lecteur lit les données de la pièce d'identité pour obtenir des données d'identité ou à obtenir des données biométriques du passager (par exemple une empreinte digitale).

Pendant une étape 210, le premier lecteur envoie les données lues lors de l'étape 204, et éventuellement celles lues lors de l'étape 208, à un serveur central distant, tel que par exemple le serveur 120, au travers d'un réseau de communication, tel que par exemple le réseau 118.

Lors d'une étape 212, le serveur central, à l'aide de l'identifiant du passager, extrait d'une base de données, par exemple la base de données 122, les données mémorisées avec l'identifiant reçu. Ces données comprennent des données relatives au voyage du passager.

Le serveur central compare à l'étape 214, les données reçues du premier lecteur avec celles extraites de la base de données et/ou à des données prédéterminées. Le serveur central compare par exemple un lieu de départ avec un lieu de départ autorisé, un jour de départ avec un jour de départ autorisé, l'heure de vol avec une fourchette d'heure autorisée, ou un numéro de vol avec une liste de numéros de vol autorisés, également stockés au niveau du serveur, et vérifie si le passager dispose d'une autorisation de mettre des bagages en soute.

A l'étape 216, le serveur central délivre une donnée d'autorisation. Lorsque les données extraites correspondent aux données lues, le serveur central délivre une autorisation accordée dans la zone de dépose sinon une donnée d'autorisation refusée ou un d'erreur.

Lors d'une étape 218, le serveur central modifie l'état d'une donnée associée à la carte d'embarquement pour indiquer qu'il a pénétré dans la zone de dépose ou non. Une donnée « enregistrement bagage ? » peut par exemple passer de « 0 » à « 1 ».

Il est à noter que cette donnée d'état peut être également testée avant la délivrance d'une donnée d'autorisation pour par exemple ne pas laisser entrer un passager dont la donnée d'enregistrement bagage traduit qu'il a déjà été autorisé à entrer dans la zone sécurisée de dépose.

Le serveur central transmet au premier lecteur un message comprenant la donnée d'autorisation ou le message d'erreur lors d'une étape 220.

Lors d'une étape 222, si le message reçu comprend une donnée d'autorisation accordée, le premier lecteur commande l'ouverture d'un dispositif de régulation d'entrée à la zone de dépose, tel que par exemple le dispositif 108, autorisant l'entrée du passager dans la zone de dépose. Sinon, le message d'erreur reçu du serveur central est affiché sur un écran d'affichage du lecteur.

Alternativement, les étapes de comparaison et de délivrance d'autorisation peuvent être effectuées au niveau du premier lecteur qui aura préalablement récupéré des informations depuis le serveur central. Il est à noter que l'étape d'obtention des données d'identité et de comparaison de ces données avec des données extraites est optionnelle. De même, les données qui sont examinées pour délivrer l'autorisation sont indiquées à titre d'exemple et d'autres données ou combinaison de données pourraient également être examinées à ce stade.

Une fois qu'il est dans la zone de dépose, le passager peut alors se diriger vers un deuxième moyen de lecture, par exemple la borne 124 comprenant un deuxième lecteur 132.

Le passager présente, lors d'une étape 224, sa carte d'embarquement au deuxième lecteur se trouvant dans la borne 124.

Le code-barres, comprenant l'identifiant du passager et éventuellement d'autres données sont lues par la borne 124 lors de l'étape 226.

La borne demande au serveur central la donnée d'état associée à l'identifiant qui vient d'être lu, lors d'une étape 228.

Il est également possible d'enregistrer l'horaire auquel le passager est entré dans la zone de dépose et de vérifier que cet horaire n'est pas trop éloigné de l'horaire actuel.

La donnée d'état est communiquée par le serveur à la borne lors de l'étape 230.

S'il s'avère, au vue de la donnée d'état, que le passager est entré dans la zone avec la carte d'embarquement scannée au premier lecteur, la borne délivre, à l'étape 232, une autorisation au passager pour déposer son bagage.

Dans le cas contraire, un message d'erreur s'affiche sur un écran de la borne. Il est également possible d'associer à cette erreur une alerte au niveau de la borne, qui peut être à cet effet munie de moyens sonores et/ou lumineux.

S'il a été détecté à l'entrée de la zone de dépose, c'est-à-dire au niveau de l'entrée de la zone de dépose, lors de l'étape 216 par exemple, que le passager n'a pas le droit de déposer un bagage, il est alors possible de donner au passager le droit d'entrer dans la zone pour acheter un supplément bagage au niveau de la borne. Dans ce cas, une donnée relative au dépôt d'un bagage est mémorisée en plus, par exemple lors de l'étape 218. Cette donnée relative au droit de dépôt d'un bagage est testée au niveau de la borne, en fonction de la valeur de cette donnée (si le passager n'est pas autorisé à déposer le bagage), un écran spécial d'achat s'affiche. La borne peut dans ce cas être munie d'un terminal de paiement par carte bancaire par exemple.

Si le passager a l'autorisation de déposer un bagage, lors d'une étape 234, il pose un par un ses bagages sur un dispositif de chargement capable de mesurer le poids et éventuellement les dimensions du bagage, par exemple le dispositif de chargement 128 du système 100.

Chaque bagage est pesé lors d'une étape 236 un par un. Les dimensions de chaque bagage sont également vérifiées.

Le poids de chaque bagage est communiqué à la borne par le dispositif de chargement lors d'une étape 238.

Lors d'une étape 240, la borne compare le poids de chaque bagage à un ou des seuils prédéterminés, éventuellement extraits au moins partiellement depuis le serveur central et qui peuvent être en relation avec le passager (si, selon le statut du passager, le poids du bagage qu'il a le droit de transporter change).

Dans le cas où le poids et/ou les dimensions du bagage ne sont pas conformes, on affiche sur la borne un message d'erreur. Il est également possible de permettre au passager de payer un supplément pour couvrir cet impondérable ou activer les moyens d'alerte visuelle et/ou sonore.

Si le poids et les dimensions de chaque bagage tel que mesuré sont corrects, lors d'une étape 242, la borne munie d'une imprimante, par exemple l'imprimante 136 du système 100, imprime une étiquette à bagages classique.

L'utilisateur appose ensuite l'étiquette imprimée sur le bagage concerné lors d'une étape 244.

Il dépose ensuite le bagage sur le convoyeur, par exemple le convoyeur 102 de la FIGURE 1.

Une fois tous ses bagages déposés sur le convoyeur le passager quitte la zone de dépose éventuellement après avoir à nouveau scanné sa carte d'embarquement sur un dispositif de lecture, tel que le troisième lecteur du système 100 de la FIGURE 1.

Dans un autre mode de réalisation alternatif ou combiné avec le mode de réalisation qui vient d'être décrit, l'étiquette imprimée comprend une puce RFID. Lorsque le passager souhaite sortir de la zone sécurisée de dépose, il passe au niveau du point de sortie à travers un détecteur, tel que le dispositif de détection 142 de la FIGURE 1, destiné à détecter les puces RFID des étiquettes que l'utilisateur transporte sur lui. Si l'utilisateur possède des étiquettes sur lui, le détecteur permet de les identifier et de commander la mise en fonctionnement de moyens d'alerte visuels et/ou sonores. Dans le cas où un tel détecteur est placé devant un dispositif de régulation de sortie de la zone de dépose, tel que le dispositif 112 de la FIGURE 1, le troisième lecteur peut également désactiver la commande d'ouverture de ce dispositif interdisant la sortie du passager de la zone dépose.

Dans un autre mode de réalisation alternatif ou pouvant être combiné au(x) mode(s) de réalisation déjà décrit(s), le convoyeur est muni d'un tunnel tel que le tunnel 144 de la FIGURE 1. Au moment de l'impression de l'étiquette, une référence ou une donnée d'identification de la puce RFID qui se trouve dans l'étiquette imprimée est associée à l'identifiant de la carte d'embarquement, soit au niveau du serveur central, dans ce cas ces données sont envoyées au serveur central, par exemple sous la forme d'un message, pour qu'il associe un identifiant de la puce RFID lu avant l'impression à l'identifiant de la carte d'embarquement, soit en inscrivant l'identifiant de la carte d'embarquement dans la puce RFID. D'autres données peuvent également être inscrites dans la puce RFID du bagage ou au niveau du serveur distant, telles que par exemple des données de poids et/ou de dimension du bagage auquel l'étiquette est associée. Le nombre de bagages qui a été enregistré avec la carte d'embarquement est également inscrit au niveau du serveur central.

Lorsque les bagages passent sous le tunnel du convoyeur, les puces RFID des bagages sont détectées et leurs contenus lus. Le tunnel peut également vérifier le poids des bagages à l'aide d'une balance placée sous le convoyeur et comparer ce poids avec celui inscrit dans la puce. Si le poids du bagage ne correspond pas à celui pesé lors de l'étape d'impression de l'étiquette, on peut déclencher une alarme sonore au niveau du tunnel pour mettre le bagage en attente. Les données mesurées et celles enregistrées sont comparées localement au niveau du tunnel ou au niveau du serveur central.

Il est également possible d'inscrire dans la base de données centrale que le bagage ayant un identifiant prédéterminé est bien passé dans le convoyeur et que son poids correspondait bien à celui du bagage enregistré.

Dans ce cas, lorsque le passager souhaite sortir de la zone sécurisée de dépose, sa carte d'embarquement est lue à l'aide du troisième lecteur situé au niveau de la sortie de la zone de dépose. Le troisième lecteur communique alors avec le serveur central pour vérifier si tous les bagages associés à l'identifiant de la carte d'embarquement qui vient d'être lue ont bien été détectés dans le tunnel et si le poids de chacun des bagages correspondait à celui pesé sur la borne.

Si c'est le cas, le dispositif commande l'ouverture du dispositif de régulation de sortie autorisant ainsi la sortie du passager de la zone de dépose. Si ce n'est pas le cas, le dispositif de régulation de sortie reste fermé et interdit la sortie de la zone de dépose. Une alarme lumineuse et/ou sonore est alors activée pour avertir un opérateur.

Bien entendu l'invention n'est pas limitée aux exemples qui viennent d'être décrits. Dans sa configuration la plus simple, le système selon l'invention ne comprend pas de point de contrôle en sortie de la zone de dépose. Les données d'identité ne sont pas forcément non plus scannées à l'entrée. Le nombre de bornes dans la zone de dépose n'est pas limité à ce qui a été décrit. De même le nombre de points d'entrée et de sortie n'est pas limité à ce qui a été décrit et peut être modifié pour faciliter le flux des passagers et limiter le temps d'attente pour le dépôt des bagages. Les bornes décrites peuvent présenter bien d'autres fonctions que celles décrites (changement de siège, achat de supplément, etc.). Le dispositif de chargement pourrait également être associé au premier et non au deuxième lecteur.

## Revendications

1. Procédé (200) de dépose automatique d'au moins un objet sur un convoyeur (102), en vue du transport dudit au moins un objet, au niveau d'une zone (106), dite de dépose, délimitée et laissant accès audit convoyeur (102), ladite zone de dépose (106) comprenant au moins un point d'entrée (110) et au moins un point de sortie (114), et ledit procédé comprenant lors de la dépose d'au moins un objet par au moins un utilisateur :
▪ une phase (202-222), dite d'entrée dans la zone de dépose (106), comprenant les étapes suivantes :
• lecture (204), dite première lecture, d'une donnée d'autorisation d'accès à ladite zone dépose (106) fournie par ledit utilisateur, et
• lorsque la donnée d'autorisation lue est valide, autorisation (216-222) dudit utilisateur à entrer dans ladite zone de dépose (106) ; et
▪ une phase (224-246), dite de dépose, comprenant les étapes suivantes :
• lecture (226), dite deuxième lecture, de ladite donnée d'autorisation à l'intérieur de la zone de dépose (106),
• lorsque la donnée d'autorisation lue lors de la deuxième lecture est une donnée lue préalablement lors de la première lecture, création et délivrance (242) d'un moyen, dit étiquette, d'identification dudit objet comprenant au moins une donnée relative au transport et/ou à l'identification de l'objet,
• pose de ladite étiquette d'identification sur ledit objet, et
• dépose (244) dudit objet sur ledit convoyeur (102) par ledit utilisateur.

2. Procédé selon la revendication 1, **caractérisé en ce que** l'étape de création de l'étiquette comprend une étape d'impression de l'au moins une donnée sur un support et/ou une étape d'inscription de l'au moins une donnée sous forme numérique dans une mémoire, telle qu'une puce RFID, intégrée à l'étiquette.

3. Procédé (200) selon l'une quelconque des revendications précédentes, caractérisé en ce la donnée d'autorisation est inscrite sur une carte d'embarquement à code barre ou sous forme numérique dans une mémoire, telle qu'une puce RFID.

4. Procédé (200) selon l'une quelconque des revendications précédentes, **caractérisé en ce que** la phase d'entrée dans la zone de dépose (106) comprend une étape (214) de comparaison de la donnée d'autorisation lue à une donnée relative à :
- un lieu de départ, par exemple un lieu de départ d'un vol dans le cas d'un bagage transporté par voie aérienne,
- un lieu d'arrivée par exemple un lieu d'arrivée d'un vol dans le cas d'un bagage transporté par voie aérienne,
- une heure de départ, et/ou
- un droit associé à un transport.

5. Procédé (200) selon l'une quelconque des revendications précédentes, **caractérisé en ce que** la phase (202-222) d'entrée dans la zone de dépose comprend :
- une étape (208) de lecture d'une donnée d'identité, et
- une étape (214) de vérification de l'association de la donnée d'autorisation lue avec la donnée d'identité lue, l'autorisation à entrer dans la zone étant alors également fonction du résultat de cette étape de vérification.

6. Procédé (200) selon l'une quelconque des revendications précédentes, **caractérisé en ce que** l'étape (216-222) d'autorisation comprend une ouverture (222) d'un dispositif (108) de régulation d'entrée dans la zone de dépose (106).

7. Procédé (200) l'une quelconque des revendications précédentes, **caractérisé en ce qu'**il comprend, en outre, une phase, dite de sortie de la zone de dépose (106), réalisée après la phase de dépose (224-246) et comprenant, lorsque l'étiquette comprend un support de données lisible à distance, tel qu'une puce RFID :
- une étape de détection d'une étiquette délivrée dans la zone de dépose et non apposée sur un objet avant de sortir de la zone de dépose, et
- une étape d'ouverture d'un dispositif (114) de régulation de sortie de la zone de dépose (106) lorsqu'aucune étiquette n'est détectée lors de l'étape de détection.

8. Procédé selon l'une quelconque des revendications précédentes, **caractérisé en ce qu'**il comprend en outre :
- une étape de mémorisation, en association avec l'utilisateur, des étiquettes délivrées à l'utilisateur,
- une étape de détection des étiquettes apposées sur les objets passant sur le convoyeur, et
- une étape de modification du statut d'une donnée associée à l'étiquette une fois l'étiquette détectée sur le convoyeur.

9. Procédé selon les revendications 7 et 8, **caractérisé en ce que** l'étape de détection de la phase de sortie comprend :
- une étape de lecture, dite troisième lecture, d'une donnée relative à l'utilisateur, et
- une étape de vérification du statut des étiquettes mémorisées en association avec l'utilisateur ;
l'étape d'ouverture d'un dispositif (114) de régulation de sortie de la zone de dépose (106) étant réalisée en fonction du statut des étiquettes et éventuellement du résultat de la comparaison de données, préalablement déterminées, relatives au poids et/ou aux dimensions des objets sur lesquelles ont été apposés les étiquettes.

10. Procédé selon l'une quelconque des revendications précédentes, **caractérisé en ce qu'**il comprend une étape (236) de mesure et de vérification d'un poids ou d'une dimension d'au moins un objet lors de la phase d'entrée dans la zone de dépose (106) ou lors de la phase de dépose (224-246).

11. Procédé (200) selon la revendication 10, **caractérisé en ce que**, pour au moins un objet, l'étape (236) de mesure et de vérification, comprend :
- avant l'étape de dépose (246), une étape de mémorisation d'au moins une donnée relative à une dimension ou un poids de l'objet, et
- lors de/après l'étape de dépose de l'objet sur le convoyeur (102) :
▪ une étape de mesure d'un poids ou d'une dimension de l'objet, et
▪ une étape de comparaison dudit poids ou de ladite dimension mesuré(e) avec ladite donnée de poids ou de dimension mémorisée.

12. Système (100) de dépose automatique d'au moins un objet sur un convoyeur (102) en vue du transport dudit au moins un objet, ledit système (100) comprenant :
- au moins un moyen (104) pour délimiter une zone (106), dite de dépose, permettant d'accéder audit convoyeur (102) et comprenant au moins un point d'entrée (110) dans ladite zone de dépose (106) et au moins un point de sortie (114) de ladite zone de dépose (106),
- au niveau de chaque point d'entrée (110) dans ladite zone de dépose (102) au moins un moyen (116) de lecture, dit premier lecteur, d'une donnée d'autorisation,
- dans la zone de dépose (106) :
▪ au moins un moyen (132,134) de lecture, dit deuxième lecteur, d'une donnée d'autorisation,
▪ au moins un moyen (136,138) de création et de délivrance d'un moyen, dit étiquette, d'identification à apposer sur l'objet à déposer, et
- au moins une base de données (122) stockant des données relatives à l'utilisateur et/ou à l'objet, accessible par lesdits lecteurs (116,132), et
- des moyens de comparaison des données lues par le premier lecteur avec les données stockées dans la base de données et les données lues par le premier lecteur avec celles lues par le deuxième lecteur ; le système étant configuré pour mettre en oeuvre les étapes du procédé selon la revendication 1.

13. Système (100) selon la revendication 12, **caractérisé en ce qu'**il comprend au niveau de chaque point de sortie (114) de la zone de dépose (106) :
▪ au moins un moyen (112) de régulation de sortie de ladite zone de dépose (106), et
▪ au moins un moyen (140) de lecture, dit troisième lecteur,
d'une donnée d'autorisation ; la base de données (122) étant en outre accessible audit troisième lecteur (140).

14. Système (100) selon l'une quelconque des revendications 12 ou 13, **caractérisé en ce qu'**il comprend en outre au moins un moyen (128,130) de mesure d'un poids ou d'une dimension d'un objet.

15. Système (100) selon l'une quelconque des revendications 12 à 14, **caractérisé en ce qu'**il comprend en outre des moyens (136,138) d'écriture, notamment d'impression ou d'inscription d'une donnée numérique, sur l'étiquette et/ou sur un support d'identification depuis lequel la donnée d'autorisation est lue.

16. Aéroport muni d'un système (100) selon l'une quelconque des revendications 12 à 15 pour la dépose automatisée de bagages.

## Patentansprüche

1. Verfahren (200) zum automatischen Auflegen mindestens eines Gegenstands auf einen Förderer (102), zur Beförderung des mindestens einen Gegenstands, auf der Höhe eines eingegrenzten, Zugang zu dem Förderer (102) gebenden, sogenannten Auflagebereichs (106), wobei der Auflagebereich (106) mindestens einen Eingangspunkt (110) und mindestens einen Ausgangspunkt (114) umfasst und wobei das Verfahren während des Auflegens mindestens eines Gegenstands durch mindestens einen Benutzer umfasst:
▪ einen sogenannten Eingangsschritt (202-222) zum Eingang in den Auflagebereich (106) mit den folgenden Schritten:
• Lesen (204), das sogenannte erste Lesen, einer durch den Benutzer bereitgestellten Information zur Zugangsberechtigung in den Auflagebereich (106); und
• wenn die gelesene Berechtigungsinformation gültig ist, Berechtigung (216-222) des Benutzers, in den Auflagebereich (106) einzutreten; und
▪ einen sogenannten Auflageschritt (224-246) mit den folgenden Schritten:
• Lesen (226), das sogenannte zweite Lesen, der Berechtigungsinformation im Inneren des Auflagebereichs (106) ;
• handelt es sich bei der bei dem zweiten Lesen gelesenen Berechtigungsinformation um eine vorher bei dem ersten Lesen gelesene Information, Herstellung und Ausgabe (242) eines Mittels, eines sogenannten Etiketts, zur Identifizierung des Gegenstands, wobei es mindestens eine Information bezüglich der Beförderung und/oder der Identifizierung des Gegenstands umfasst;
• Anbringung des Identifizierungsetiketts auf dem Gegenstand; und
• Auflegen (244) des Gegenstands auf den Förderer (102) durch den Benutzer.

2. Verfahren nach Anspruch 1, **dadurch gekennzeichnet, dass** der Schritt der Herstellung des Etiketts einen Druckschritt zum Drucken der mindestens einen Information auf einem Träger und/ oder einen Schritt des Schreibens der mindestens einen Information auf einem im Etikett eingebauten Speichermedium wie zum Beispiel einem RFID-Chip umfasst.

3. Verfahren (200) nach einem der vorhergehenden Ansprüche, **dadurch gekennzeichnet, dass** die Berechtigungsinformation auf einer Bordkarte mit Strichcode oder in digitaler Form in einem Speichermedium wie einem RFID-Chip geschrieben wird.

4. Verfahren (200) nach einem der vorhergehenden Ansprüche, **dadurch gekennzeichnet, dass** der Eingangsschritt zum Eingang in den Auflagebereich (106) einen Abgleichschritt (214) zum Abgleich der gelesenen Berechtigungsinformation mit einer Information bezüglich:
- eines Abfahrtsorts, zum Beispiel eines Abflugorts im Falle eines auf dem Luftweg beförderten Gepäckstücks;
- eines Ankunftsorts, zum Beispiel eines Ankunftsorts eines Flugs im Falle eines auf dem Luftweg beförderten Gepäckstücks;
- einer Abfahrtzeit; und/oder
- eines einer Beförderung zugeordneten Anspruchs umfasst.

5. Verfahren (200) nach einem der vorhergehenden Ansprüche, **dadurch gekennzeichnet, dass** der Eingangsschritt (202-222) zum Eingang in den Auflagebereich umfasst:
- einen Schritt (208) zum Lesen einer Identitätsinformation; und
- einen Schritt (214) zur Prüfung der Zuordnung der gelesenen Berechtigungsinformation der gelesenen Identitätsinformation, wobei die Berechtigung zum Eingang in den Bereich auch vom Ergebnis dieses Prüfschrittes abhängt.

6. Verfahren (200) nach einem der vorhergehenden Ansprüche, **dadurch gekennzeichnet, dass** der Berechtigungsschritt (216-222) eine Öffnung (222) einer Vorrichtung (108) zur Regulierung des Eingangs in den Auflagebereich (106) umfasst.

7. Verfahren (200) nach einem der vorhergehenden Ansprüche, **dadurch gekennzeichnet, dass** es außerdem einen Ausgangsschritt zum sogenannten Ausgang aus dem Auflagebereich (106) umfasst, welcher nach dem Auflageschritt (224-246) ausgeführt wird und welcher umfasst, wenn das Etikett einen aus der Entfernung lesbaren Datenträger wie einen RFID-Chip umfasst:
- einen Erkennungsschritt zur Erkennung eines Etiketts, das in dem Auflagebereich ausgegeben und nicht auf einem Gegenstand vor dem Verlassen des Auflagebereichs angebracht wurde; und
- einen Öffnungsschritt zur Öffnung einer Vorrichtung (114) zur Regulierung des Ausgangs aus dem Auflagebereich (106), wenn bei dem Erkennungsschritt kein Etikett erkannt wird.

8. Verfahren nach einem der vorhergehenden Ansprüche, **dadurch gekennzeichnet, dass** es außerdem umfasst:
- einen Speicherschritt zur dem Benutzer zugeordneten Speicherung der dem Benutzer ausgegebenen Etiketten;
- einen Erkennungsschritt zur Erkennung der Etiketten, die auf den auf dem Förderer fahrenden Gegenständen angebracht wurden; und
- einen Änderungsschritt zur Änderung des Status einer dem Etikett zugeordneten Information, wenn das Etikett auf dem Förderer erkannt wird.

9. Verfahren nach den Ansprüchen 7 und 8, **dadurch gekennzeichnet, dass** der Erkennungsschritt zur Erkennung des Ausgangsschrittes umfasst:
- einen Leseschritt zum sogenannten dritten Lesen einer Information bezüglich des Benutzers; und
- einen Prüfschritt zur Prüfung des Status der dem Benutzer zugeordnet gespeicherten Etiketten;
wobei der Öffnungsschritt zur Öffnung einer Vorrichtung (114) zur Regulierung des Ausgangs aus dem Auflagebereich (106) in Abhängigkeit von dem Status der Etiketten und eventuell von dem Ergebnis des Abgleichs von vorab bestimmten Daten bezüglich des Gewichts und/oder der Abmessungen der Gegenstände, auf welchen die Etiketten angebracht wurden, ausgeführt wird.

10. Verfahren nach einem der vorhergehenden Ansprüche, **dadurch gekennzeichnet, dass** es einen Schritt (236) zur Messung und Prüfung eines Gewichts oder einer Abmessung mindestens eines Gegenstands während des Eingangsschritts zum Eingang in den Auflagebereich (106) oder während des Auflageschritts (224-246) umfasst.

11. Verfahren (200) nach Anspruch 10, **dadurch gekennzeichnet, dass** für mindestens einen Gegenstand der Schritt (236) zur Messung und Prüfung umfasst:
- vor dem Auflageschritt (246) einen Schritt zur Speicherung mindestens einer Information bezüglich einer Abmessung oder eines Gewichts des Gegenstands; und
- während des/nach dem Auflageschritt(s) zum Auflegen des Gegenstands auf den Förderer (102):
▪ einen Messschritt zur Messung eines Gewichts oder einer Abmessung des Gegenstands; und
▪ einen Abgleichschritt zum Abgleich des gemessenen Gewichts oder der gemessenen Abmessung mit der gespeicherten Information bezüglich des Gewichts oder der Abmessung.

12. System (100) zum automatischen Auflegen mindestens eines Gegenstands auf einen Förderer (102) zur Förderung des mindestens einen Gegenstands, wobei das System (100) umfasst:
- mindestens ein Mittel (104) zur Eingrenzung eines sogenannten Auflagebereichs (106), wobei man damit Zugang zu dem Förderer (102) erhält und es mindestens einen Eingangspunkt (110) in den Auflagebereich (106) und mindestens einen Ausgangspunkt (114) aus dem Auflagebereich (106) umfasst;
- auf der Höhe eines jeweiligen Eingangspunkts (110) in den Auflagebereich (102) mindestens ein Lesemittel (116), einen sogenannten ersten Leser, einer Berechtigungsinformation;
- im Auflagebereich (106):
▪ mindestens ein Lesemittel (132, 134), einen sogenannten zweiten Leser, einer Berechtigungsinformation;
▪ mindestens ein Mittel (136, 138) zur Herstellung und Ausgabe eines Identifikationsmittels, eines sogenannten Etiketts, zur Anbringung auf dem abzustellenden Gegenstand; und
- mindestens eine Datenbank (122) zur Speicherung der Daten bezüglich des Benutzers und/oder des Gegenstands, die über die Leser (116, 132) zugänglich ist; und
- Mittel zum Abgleich der durch den ersten Leser gelesenen Daten mit den in der Datenbank gespeicherten Daten und der durch den ersten Leser gelesenen Daten mit denen, die durch den zweiten Leser gelesen wurden;
wobei das System dafür eingerichtet ist, die Schritte des Verfahrens nach Anspruch 1 umzusetzen.

13. System (100) nach Anspruch 12, **dadurch gekennzeichnet, dass** es auf der Höhe eines jeweiligen Ausgangspunkts (114) des Auflagebereichs (106) umfasst:
▪ mindestens ein Mittel (112) zur Regulierung des Ausgangs aus dem Auflagebereich (106); und
▪ mindestens ein Lesemittel (140), einen sogenannten zweiten Leser, einer Berechtigungsinformation;
wobei die Datenbank (122) außerdem dem dritten Leser (140) zugänglich ist.

14. System (100) nach einem der Ansprüche 12 oder 13, **dadurch gekennzeichnet, dass** es außerdem mindestens ein Mittel (128, 130) zur Messung eines Gewichts oder einer Abmessung eines Gegenstands umfasst.

15. System (100) nach einem der Ansprüche 12 bis 14, **dadurch gekennzeichnet, dass** es außerdem Schreibmittel (136, 138) insbesondere zum Drucken oder zum Schreiben einer digitalen Information auf dem Etikett und/oder einem Identifikationsträger, von welchem die Berechtigungsinformation abgelesen wird.

16. Flughafen mit einem System (100) nach einem der Ansprüche 12 bis 15 zum automatisierten Auflegen von Gepäckstücken.

## Claims

1. A method (200) for the automatic drop-off of at least one object on a conveyor belt (102), for the purpose of transporting said at least one object, at an area (106), called drop-off area, delimited and allowing access to said conveyor belt (102), said drop-off area (106) comprising at least one point of entry (110) and at least one point of exit (114), and said method comprising, during the drop-off of at least one object by at least one user:
- a phase (202-222), called drop-off area (106) entry phase, comprising the following steps:
• reading (204), called first reading, of a drop-off area (106) access authorisation data provided by said user, and
• when the read authorization data is valid, authorizing (216-222) of said user to enter said drop-off area (106); and
- a phase (224-246), called drop phase, comprising the following steps:
• reading (226), called second reading, said authorisation data inside the drop-off area (106),
• if the authorization data read during the second reading is a data read previously during the first reading, creating and delivering (242) a means, called a tag, of identification of said object comprising at least one data relating to the transport and/or the identification of the object,
• affixing said identification tag to said object, and
• drop-off (244) of said object on said conveyor belt (102) by said user.

2. The method according to claim 1, **characterized in that** the step of creating the tag comprises a step of printing the at least one data on a media and/or a step of writing the at least one data in digital form to a memory, such as an RFID chip, integrated in the tag.

3. The method (200) according to any one of the preceding claims, **characterized in that** the authorization data is written on a bar code boarding card or in digital form in a memory, such as an RFID chip.

4. The method (200) according to any one of the preceding claims, **characterized in that** the phase of entry to the drop-off area (106) comprises a step (214) of comparing the read authorization data with a data relating to:
- a departure location, for example a departure location of a flight in the case of a bag transported by air,
- an arrival location, for example an arrival location of a flight in the case of a bag transported by air,
- a departure time, and/or
- an entitlement associated with a transport.

5. The method (200) according to any one of the preceding claims, **characterized in that** the phase (202-222) of entering the drop-off area comprises:
- a step (208) of reading an identity data, and
- a step (214) of verifying the association of the read authorization data with the read identity data, the authorization to enter the area then also depending on the result of this verification step.

6. The method (200) according to any one of the preceding claims, **characterized in that** the authorization step (216-222) comprises an opening (222) of a device (108) controlling entry into the drop-off area (106).

7. The method (200) according to any one of the preceding claims, **characterized in that** it also comprises a phase, called drop-off area (106) exit phase, performed after the drop phase (224-246) and comprising, when the tag comprises a remotely readable data medium, such as an RFID chip:
- a step of detecting a tag delivered in the drop-off area and not affixed to an object before exit from the drop-off area, and
- a step of opening a device (114) for controlling the exit from the drop-off area (106) when no tag is detected during the detection step.

8. The method according to any one of the preceding claims, **characterized in that** it also comprises:
- a step of recording, in association with the user, tags delivered to the user,
- a step of detecting tags affixed to objects passing along the conveyor belt, and
- a step of changing the status of data associated with the tag once the tag has been detected on the conveyor belt.

9. The method according to claims 7 and 8, **characterized in that** the detection step of the exit phase comprises:
- a step of reading, called third reading, of a data relating to the user, and
- a step of verifying the status of tags stored in association with the user;
the step of opening a device (114) for controlling the exit from the drop-off area (106) being performed depending on the status of the tags and optionally on the result of the comparison of previously determined data relating to the weight and/or to the dimensions of the objects to which the tags have been affixed.

10. The method according to any one of the preceding claims, **characterized in that** it comprises a step (236) of measurement and verification of a weight or a dimension of at least one object during the drop-off area (106) entry phase or during the drop-off of phase (224-246).

11. The method (200) according to claim 10, **characterized in that**, for at least one object, the step (236) of measurement and verification comprises:
- before the drop-off step (246), a step of storing at least one data relating to a dimension or a weight of the object, and
- during/after the step of drop-off of the object on the conveyor belt (102):
▪ a step of measuring a weight or a dimension of the object, and
▪ a step of comparing said measured weight or said measured dimension with said stored item of weight or dimension data.

12. A system (100) for the automatic drop-off of at least one object on a conveyor belt (102) for the purpose of the transport of said at least one object, said system (100) comprising:
- at least one means (104) for delimiting an area (106), called drop-off area, allowing access to said conveyor belt (102) and comprising at least one point of entry (110) into said drop-off area (106) and at least one point of exit (114) from said drop-off area (106),
- at each point of entry (110) into said drop-off area (102) at least one means (116), called first reader, of reading of an authorization data,
- in the drop-off area (106):
▪ at least one means (132,134), called second reader, of reading an authorization data,
▪ at least one means (136,138) of creating and delivering a means, called tag, of identification to be affixed to the object to be dropped, and
- at least one database (122) storing data relating to the user and/or to the object, which can be accessed by said readers (116,132), and
- means of comparing data read by the first reader with data stored in the database and data read by the first reader with those read by the second reader;
the system being configured to carry out the steps of the method according to claim 1.

13. The system (100) according to claim 12, **characterized in that** it comprises, at each point of exit (114) from the drop-off area (106):
▪ at least one means (112) of controlling the exit from said drop-off area (106), and
▪ at least one means (140), called third reader, of reading an authorization data;
the database (122) also being accessible to said third reader (140).

14. The system (100) according to any one of claims 12 or 13, **characterized in that** it also comprises at least one means (128,130) of measuring a weight or a dimension of an object.

15. The system (100) according to any one of claims 12 to 14, **characterized in that** it also comprises means (136,138) of writing, specifically printing or entering a digital data, onto the tag and/or on an identification media from which the authorization data is read.

16. Airport equipped with an automatic bag drop system (100) according to any one of claims 12 to 15.
